# EUROPÄISCHE PATENTSCHRIFT

(11) **EP 1 544 458 B1**
(45) Veröffentlichungstag und Bekanntmachung des Hinweises auf die Patenterteilung: **03.04.2013**
(21) Anmeldenummer: 05101832.3
(22) Anmeldetag: 20.06.1998
(51) Int. Cl.: F03D 7/02, F03D 7/04

(54) **Winkelregelung zur Rotorblatteinstellung für Windturbine**
Blade pitch angle control for wind turbine
Dispositif de réglage du pas de l'hélice pour turbine éolienne

(30) Priorität: 25.07.1997 DE 19731918
(43) Veröffentlichungstag der Anmeldung: 22.06.2005
(62) Teilanmeldung aus: 02012133.1
(73) Patentinhaber: Wobben Properties GmbH, 26605 Aurich (DE)
(72) Erfinder: Wobben, Aloys, 26607 Aurich (DE)
(74) Vertreter: Eisenführ, Speiser & Partner

(56) Entgegenhaltungen:
- DE-A- 2 546 884
- GB-A- 2 067 247
- US-A- 4 297 076
- US-A- 4 339 666
- US-A- 4 348 155
- US-A- 4 355 955
- US-A- 4 550 259

## Beschreibung

Die Erfindung betrifft eine Windenergieanlage mit einem Rotor mit mindestens einem Rotorblatt zur Umwandlung der Strömungsenergie des Windes in mechanische Energie, mit einer Verstellvorrichtung zur individuellen Verstellung mindestens eines Rotorblattes, mit einem Generator zur Umwandlung der mechanischen Energie des Rotors in elektrische Energie und mit einer Wirkverbindung zwischen dem Rotor und dem Generator zur Übertragung der mechanischen Energie des Rotors auf den Generator.

Derartige Windenergieanlagen gehören zum Stand der Technik. So zeigt z.B. das deutsche Fachbuch "Windkraftanlagen" von Erich Hau, Springer-Verlag, 2. Aufl., 1996, Seiten 52, 175, 222 bis 242, 269, 320 derartige Windenergieanlagen. Bei diesen bekannten Windenergieanlagen lässt sich mit Hilfe einer Rotorblatteinstellwinkelregelung die Rotordrehzahl und die Leistungsabgabe regeln. Darüber hinaus dient die bekannte Rotorblatteinstellwinkelregelung dem Schutz gegen Überdrehzahl des Rotors bei hohen Windgeschwindigkeiten oder bei einem Netzausfall, bei dem das Generatormoment plötzlich wegfällt. In beiden Fällen geht es darum, die Windenergieanlage gegen Zerstörung durch einen zu hoch drehenden Rotor zu schützen.

Als weiterer Stand der Technik sei auf US-A-4,193,005 hingewiesen. Diesen Dokument offenbart eine Windenergieanlage mit einem Rotor, welcher über ein Getriebe mit einem Generator verbunden ist, bei welchem mittels eines Wandlers (Transducer), der an der Getriebe und den Generator verbindenden Welle angebracht wird, ein Drehmoment gemessen wird.

Dabei gibt es im wesentlichen zwei Wege, mit Hilfe der Blattverstellung eine Reduzierung der Rotordrehzahl herbeizuführen: zum einen lässt sich der Blatteinstellwinkel in Richtung kleinerer aerodynamischer Anstellwinkel reduzieren, um somit die Leistungsaufnahme des Rotors zu reduzieren. Andererseits ist es möglich, durch die Verstellung das Rotorblatteinstellwinkels zu größeren Einstellwinkeln den kritischen aerodynamischen Anstellwinkel, den sogenannten Stall-Zustand zu erreichen. Letztere Möglichkeit bietet den Vorteil der Verstellung auf kürzerem Weg, bringt jedoch den Nachteil mit sich, dass der Strömungsabriss (Stall) mit hohen Belastungen für den Rotor und die gesamte Windenergieanlage verbunden ist. Beiden Einstellmöglichkeiten ist jedoch gemeinsam, dass sie nur eine mittlere, auf die gesamte Windenergieanlage einwirkende Windgeschwindigkeit bzw. eine bestimmte Grenzrotordrehzahl als Startsignal zur Blattwinkeleinstellung berücksichtigen.

Belde vorgenannten Möglichkeiten des Standes der Technik berücksichtigen nicht, dass es insbesondere bei einem großen Rotordurchmesser zu einer ungleichmäßigen Verteilung der Windverhältnisse über die Rotorfläche kommen kann. Dies hat wiederum unterschiedliche Belastungen auf einzelne Rotorblätter, sowie asymmetrische Belastungen für den Antriebsstrang der Windenergieanlage, d.h. die Nabe, die Antriebswelle und die jeweiligen Lager zur Folge. Derartige unterschiedliche asymmetrische Belastungen treten jedoch nicht nur erst ab einer bestimmten Rotordrehzahl oder einer bestimmten Windgeschwindigkeit auf, sondern finden ständig auch während des normalen Betriebs der Windenergieanlage statt. Die bisher aus dem Stand der Technik bekannte Blattwinkeiregelung kann daher nicht auf Windgeschwindgkeitsschwankungen und damit verbundene Lastsohwankungen im Rotorbereich reagieren, da bei den bekannten Anlagen eine einheitliche, synchrone Verstellung der Rotorblätter stattfindet.

Bei neueren Anlagen (siehe insbesondere S. 238 des oben genannten Fachbuches) ist zwar zum einen eine individuelle elektrische Verstellung Jedes einzelnen Rotorblattes vorgeschlagen worden; jedoch findet auch dieser Vorschlag unter der Annahme einer mittleren Windgeschwindigkeit statt, die auf die Windenergleanlage einwirkt. Mit dieser und der weiteren Annahme, dass die Windgeschwindigkeit mit der Höhe zunimmt, wird dann eine feste, umlaufzyklische Korrektur des Rotorblatteinstellwinkels vorgeschlagen, um die Wechsellasten auf der Zunahme der Windgeschwindigkeit mit der Höhe zumindest teilweise ausregeln zu können. Auch bei dieser Rotorblatteinstelltechnik ist es nachteilig, dass der Einstellwinkel der Rotorblätter fest vorgegeben ist und daher nicht auf lokale und vorübergehende Änderungen der Windgeschwindigkeit in einem Teilbereich des Rotors reagieren kann. Auch bei diesem Vorschlag findet daher bei über der Rotorfläche gesehenen lokalen Spitzen In der Windgeschwindigkeit eine asymmetrische und somit lebensdauerverkürzende Belastung der Bestandteile der Windanergieanlage statt.

Aufgabe der Erfindung ist es daher, die oben genannten Probleme zu vermeiden und eine Windenergieanlage zur Verfügung zu stellen, bei der die Belastungen reduziert werden, die aufgrund lokaler und vorübergehender Spitzen in der Windgeschwindigkeit in Teilbereichen der Rotorfläche auftreten können.

**Die Aufgabe wird erfingdungsgemäß mit den Merkmalen nach Anspruch 1 und 22 gelöst. Vorteilhafte Weiterbildungen sind in den Unteransprüchen beschrieben.**

Erfindungsgemäß sind bei einer Windenergieanlage der eingangs genannten Art Messmittel vorgesehen sind, die die momentane Beanspruchung eines Teils der Windenergieanlage ermitteln, Steuermittel vorgesehen sind, die eine für die momentane Beanspruchung gewünschte Stellung mindestens eines Rotorblattes ermitteln und das Rotorblatt mit Hilfe der Verstellvorrichtung entsprechend verstellen und Verbindungsmittel vorgesehen sind, die die Verstellvorrichtung und die Messmittel mit den Steuermitteln verbinden.

Durch die erfindungsgemäße Winderiergieanlage wird es ermöglicht, mit Hilfe der Verstellvorrichtung zur individuellen Verstellung mindestens eines Rotorblattes die Windenergieanlage auf momentane, nur an einem Tell der Windenergieanlage lokal anliegende Beanspruchungen, von den Messmitteln ermittelt, mit Hilfe der Steuermittel abzustimmen. Somit wird vorteilhaft erreicht, dass lokale Spitzen in der Belastung der Rotorblätter, der Nabe, des Achsantriebs und der verwendeten Lager vermieden werden. Dies hat wiederum zur Folge, dass die Lebensdauer der Windenergieanlage heraufgesetzt bzw. nicht unbewusst verkürzt wird, da asymmetrische und die Lebensdauer verkürzende Beanspruchungen von Teilen der Windenergieanlage weitgehend vermieden werden.

Darüber hinaus ermöglicht es die erfindungsgemäße Windenergieanlage die momentane Verteilung der Windgeschwindigkeiten auf der Rotorfläche optimal auszunützen und daher zu einer erhöhten Leistungsausbeute der Windenergieanlage beizutragen, da alle Rotorblätter immer mit dem gewünschten und somit optimalen Blattwinkel gefahren werden und daher der Wirkungsgrad pro Rotorblatt gegenüber dem Wirkungsgrad der Windenergieanlagen aus dem Stand der Technik ansteigt.

Besonders bevorzugt ist es, dass die Stellung des Rotorblattes oder der Rotorblätter ununterbrochen der momentanen Beanspruchung der Windenergieanlage angepasst wird. Auf diese Art und Weise lässt sich sicherstellen, dass die Windenergieanlage kontinuierlich im optimalen Arbeitsbereich gefahren wird und gleichzeitig vor Belastungsspitzen, ausgelöst durch lokal im Rotorbereich vorhandene Spitzen in der Windgeschwindigkeit, geschützt ist.

Bei einer bevorzugten Ausführungsform der Erfindung ermitteln die Messmittel zur Ermittlung der lokalen Beanspruchung eines Rotorblattes eine am Rotorblatt vorherrschende Windgeschwindigkeit. Zu diesem Zweck weisen die Messmittel bevorzugt ein auf dem Rotorblatt angebrachtes Anemometer auf. Dadurch, dass das Anemometer direkt auf dem Rotorblatt angeordnet ist, ist eine sehr präzise Steuerung der Winkelstellung des Rotorblattes als Reaktion auf eine erhöhte oder niedrigere Windgeschwindigkeit möglich. Denn durch die Messung der Windgeschwindigkeit direkt an dem Ort, an dem auch eine Verstellung der Windenergieanlage stattfindet, nämlich direkt am zu verstellenden Rotorblatt, ist eine schnelle und genaue Anpassung der Rotorblattwinkelstellung an lokale Veränderungen der Windgeschwindigkeit möglich.

Eine weitere bevorzugte Ausführungsform zeichnet sich dadurch aus, dass die Messmittel eine in einem Teilabschnitt des Rotorbereichs vorherrschende mechanische Last ermitteln. Bei dieser Ausführungsform wird durch die direkte Ermittlung der in einem Teilabschnitt des Rotors anliegenden mechanischen Belastung den Steuermitteln eine präzise Information gegeben, mit deren Hilfe sie unter Berücksichtigung der vorgegebenen Geometrie-, Last- und/oder Materialdaten eine gewünschte Stellung mindestens eines verstellbaren Rotorblattes ermitteln können.

Besonders vorteilhaft bei dieser Ausführungsform ist es, wenn die Messmittel eine in dem verstellbaren Rotorblatt vorherrschende mechanische Last ermitteln. Denn indem die Last direkt im Rotorblatt ermittelt wird, kann ähnlich wie bei der oben genannten direkten Ermittlung der Windgeschwindigkeit am Rotorblatt, eine sehr präzise Information über das Windstärkenprofil über der Rotorfläche gewonnen werden. Mit einer derart genauen Information sind die Steuermittel dann in der Lage, eine besonders genaue Reaktion der Verstellvorrichtung zu steuern, so dass eine vorhandene Lastspitze in einem Teilabschnitt des Rotors sehr schnell abgebaut werden kann.

Eine weitere Ausführungsform der Erfindung mit einer Rotornabe zur Aufnahme der Rotorblätter weist Messmittel auf, die eine in der Rotornabe vorhandene mechanische Last messen. Auch bei dieser Ausführungsform lässt sich eine schnelle Anpassung der Rotorblätter an die veränderte Lastsituation vornehmen. Gleiches gilt für Ausführungsformen mit einem Achszapfen zur Lagerung des Rotors, bei dem die Messmittel eine in dem Achszapfen vorherrschende Last ermitteln und bei einer Windenergieanlage mit einer Antriebswelle, die Rotor und Generator unmittelbar oder über ein Getriebe miteinander verbindet, bei der die Messmittel eine in der Antriebswelle oder in den Lagern der Antriebswelle oder des Achszapfens vorherrschende Last ermitteln. Alle vorgenannten Ausführungsformen ermöglichen eine genaue Bestimmung der lokalen Lastverhältnisse im Rotorbereich und somit eine genaue Steuerung der Verstellvorrichtung mittels der Steuermittel. Dabei ist es besonders bevorzugt, dass die Messmittel zur Messung der mechanischen Last Dehnungsstreifen aufweisen, die an den jeweiligen belasteten Teilen der Windenergieanlage angebracht sind. Das heißt, die Dehnungsstreifen können auf dem Rotorblatt, im Innern des Rotorblattes, auf der Rotornabe oder im Innern der Rotornabe, auf dem Achszapfen oder im Innern des Achszapfens, auf der Antriebswelle oder im Innern der Antriebswelle oder an den Lagern angebracht sein. In allen vorgenannten Anbringungsvarianten ist eine einfache Bestimmung der vorhandenen mechanischen Belastung und somit die erfindungsgemäße individuelle Verstellung des Rotorblattes möglich.

Eine weitere bevorzugte Ausführungsform der Erfindung weist Messmittel auf, die einen an dem zu verstellenden Rotorblatt vorherrschenden Anströmwinkel des Windes ermitteln. Dadurch ist es vorteilhaft möglich, auch die Windrichtung des anströmenden Windes relativ zum zu verstellenden Rotorblatt zu bestimmen. Mit Hilfe dieses Messwertes können die Steuermittel auch auf eine in einem Teilbereich des Rotors vorhandene Windrichtungsänderung reagieren.

Insbesondere in Verbindung mit den oben genannten Lastmessmitteln erhalten die Steuermittel ein sehr genaues Bild über die momentanen Windverhältnisse über der Rotorfläche: durch die Lastmessmittel können die Steuermittel eine absolut vorhandene Last berücksichtigten und durch die Messmittel zur Bestimmung des Anströmwinkels kann darüber hinaus auch - unter Berücksichtigung der tatsächlichen Rotorblattstellung - eine genaue Bestimmung der Größe des zu verstellenden Winkels vorgenommen werden. Eine genaue Anpassung bei sich rasch ändernden Windverhältnissen ist somit durch die kombinierte Anwendung von Anströmwinkelmessung und Lastmessung in den Rotorblättern vorteilhaft sichergestellt. Dabei ist es besonders bevorzugt, die Messung des Anströmwinkels durch eine am Rotorblatt angebrachte Windfahne vorzunehmen.

Eine weitere bevorzugte Ausführungsform der Erfindung zeichnet sich dadurch aus, dass ein Teilabschnitt eines Rotorblattes asynchron zu mindestens einem weiteren verstellbaren Teilabschnitt eines anderen Rotorblattes verstellbar ist. Somit lässt sich insbesondere bei großen Rotordurchmessern der konstruktive Aufwand verringern, indem bevorzugt der äußere Teilabschnitt des Rotorblattes, da sich die Leistungserzeugung des Rotors weitgehend auf den äußeren Blattbereich konzentriert, verstellbar ausgeführt wird.

Bei einer vorteilhaften Ausführungsform der Erfindung lässt sich die für eine bestimmte momentane Beanspruchung gewünschte Stellung des oder der Rotorblätter über mit den Steuermitteln verbundene Eingabemittel vorgeben. Auf diese Art und Weise kann die erfindungsgemäße Windenergieanlage vor Ort nach dem Aufstellen an gegebenenfalls unvorhergesehene Windverhältnisse oder nach einer Reparatur an geänderte Materialstärken oder an geänderte Rotorblattprofile angepasst werden.

Als besonders vorteilhaft hat es sich erwiesen, den Ist-Wert der Rotorblattwinkelstellung von einem Verstellgetriebe abzugreifen, welches zusammen mit einem Verstellmotor die Verstellvorrichtung bildet. Dabei ist es besonders vorteilhaft, wenn die Steuermittel die Verstellung des Rotorblattes praktisch gleichzeitig mit der Erfassung der Messwerte aus den Dehnungsstreifen, dem Anemometer oder der Windfahne nach Abgleich mit dem Ist-Wert des Verstellgetriebes mittels des Verstellmotors vornehmen. Durch eine solche instantane Reaktion auf Belastungsänderungen im Bereich der Rotorblätter ist eine wirksame Vermeidung von schädlichen Belastungen oder einseitigen Belastungen des Rotors gewährleistet.

Ein vorteilhaftes Verfahren zur Anpassung einer Windenergieanlage an nur in einem lokalen Teilabschnitt der Windenergieanlage vorherrschende momentane Beanspruchungen zeichnet sich dadurch aus, dass von Messmitteln die momentane Belastung eines Teils der Windenergieanlage erfasst wird und von Steuermitteln eine für die momentane Beanspruchung gewünschte Stellung mindestens eines der Rotorblätter ermittelt wird und dass entsprechend der Rotorblatt mit Hilfe der Verstellvorrichtung entsprechend verstellt wird, wobei die Verstellvorrichtung und die Messmittel mit den Steuermitteln mit Hilfe von Verbindungsmitteln verbunden sind. Durch dieses einfache Verfahren lässt sich eine wirksame Erhöhung von Lebensdauer und Effizienz der erfindungsgemäßen Windenergieanlage erzielen.

Weitere vorteilhafte Ausführungsformen sind in den Unteransprüchen beschrieben.

Eine Ausführungsform der Erfindung wird nunmehr mit Bezug auf die begleitenden Zeichnungen beschrieben, in denen:
Figur 1 ein teilweiser Schnitt durch eine erfindungsgemäße Windenergieanlage ist;
Figur 2 eine Frontalansicht auf eine erfindungsgemäße Windenergieanlage ist; und
Figur 3 ein Blockschaltbild, welches die Steuerung des verstellbaren Rotorblattes bei einer bevorzugten Ausführungsform der Erfindung darstellt.

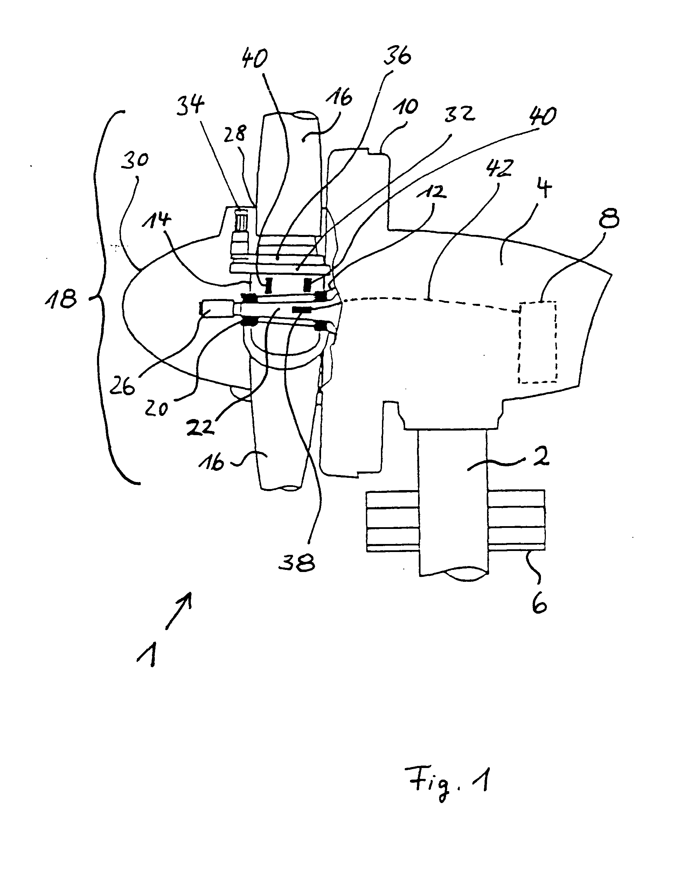

Die Figur 1 zeigt eine Windenergieanlage 1 in einem teilweisen Schnitt. Die Windenergieanlage 1 ruht auf einem (nur teilweise dargestellten) Turm 2. Am oberen Ende des Turmes 2 ist ein Gehäuse 4 auf den Turm aufgesetzt. Unterhalb des Gehäuses 4 liegt eine am Turm angebrachte Wartungsplattform 6. Das Gehäuse 4 weist in seinem (in der Zeichnung geschlossenen, rechts dargestellten) hinteren Teil einen (nicht dargestellten) Generator und ein gestrichelt dargestelltes Steuergerät 8 auf. Der Generator befindet sich hinter einer Auswölbung 10 des Gehäuses 4 und ist über Verbindungselemente 12 mit seinem (nicht dargestellten) Läufer an der Rotornabe 14 angeflanscht. Die Rotornabe 14 und die (nur teilweise dargestellten) Rotorblätter 16 bilden zusammen den Rotor 18. Der Rotor 18 ist mit seiner Rotornabe 14 über Lager 20 auf einem Achszapfen 22 gelagert. Der Achszapfen 22 ragt durch eine in der Rotornabe 14 vorgesehene Öffnung 24 durch die Rotornabe 14 hindurch. Der Achszapfen 22 ist turmseitig innerhalb des Gehäuses 4 mit dem Turm 2 verbunden. Von dem im wesentlichen vertikal aufzustellenden Turm 2 ragt der Achszapfen 22 gegenüber der Horizontalen leicht nach oben gekippt ab. Der Achszapfen 22 ist mit dem (nicht dargestellten) Stator des Generators verbunden und ragt durch den Läufer des Generators und durch die Öffnung 24 der Rotornabe 14 hindurch und wird nach seinem Austritt aus der Öffnung 24 auf der von dem Turm 2 abgewandten Seite des Rotors 18 von einem Abschlussstück 26 abgeschlossen.

Wiederum senkrecht zur Achse des Achszapfens 22 erstrecken sich die Rotorblätter 16 nach außen. Dabei treten die Rotorblätter 16 durch Öffnungen 28 im Vordergehäuse 30 hindurch. Das Vordergehäuse 30 ist beweglich gegenüber dem fest mit dem Turm 2 verbunden Gehäuse 4 und fest mit der Nabe 14 verbunden.

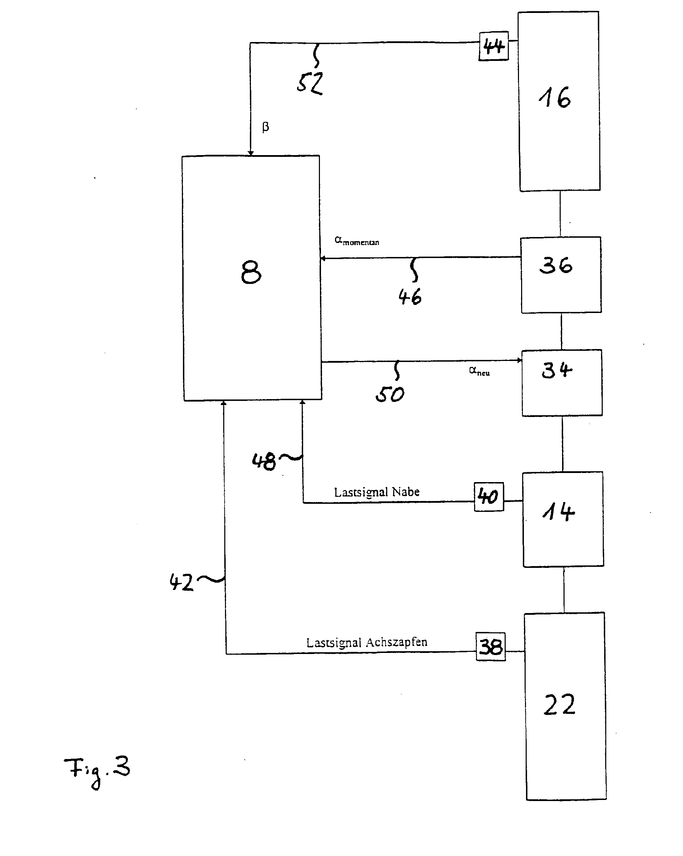

Die Rotorblätter 16 sind über eine Flanschverbindung mit der Rotornabe 14 drehbar um ihre Längsachse verbunden. Ein Verstellmotor 34 ist an der Flanschverbindung 32 angebracht und verstellt über ein Verstellgetriebe 36 das Rotorblatt 16. Der Verstellmotor 34 und das Verstellgetriebe 36 sind über elektrische (in Fig. 3 dargestellte) Verbindungen 50 bzw. 46 mit dem Steuergerät 8 verbunden. Das Vordergehäuse 30 umschließt die Rotornabe 14 mit den Lagern 20, der Flanschverbindung 32, dem Verstellmotor 34 und dem Verstellgetriebe 36 wetterdicht. Das Vordergehäuse 30 weist eine im Querschnitt im wesentlichen halbkugelförmige Form auf.

An dem Achszapfen 22 befinden sich Dehnungsstreifen 38. An der Rotornabe 14 befinden sich Dehnungsstreifen 40. Die Dehnungsstreifen 38 sind über eine elektrische Verbindung 42 mit dem Steuergerät 8 verbunden. Die Dehnungsstreifen 40 sind über eine (in Fig. 3 dargestellte) elektrische Verbindung 48 mit dem Steuergerät 8 verbunden.

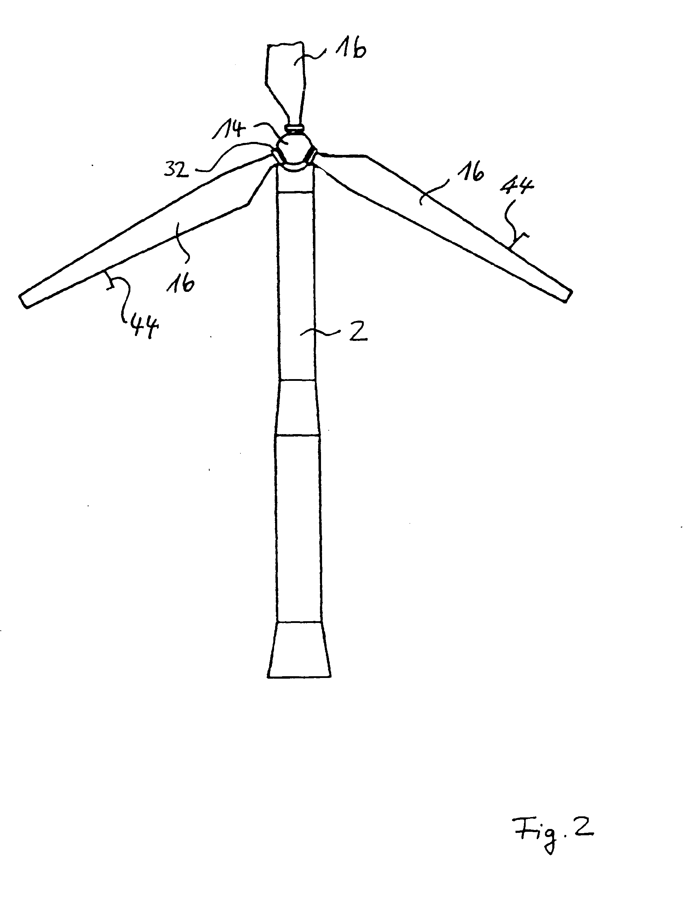

Die Figur 2 zeigt Teile der Windenergieanlage 1 der Figur 1 von der Rotorseite her gesehen. Figur 2 zeigt den Turm 2 mit der an seiner Spitze angebrachten Rotornabe 14. Von der Rotornabe 14 gehen sternförmig drei Rotorblätter 16 aus. Die Rotorblätter 16 sind über die Flanschverbindungen 32 mit der Rotornabe 14 verbunden. Zur Verdeutlichung der Darstellung sind das Vordergehäuse 30, der Verstellmotor 34, das Verstellgetriebe 36, der Achszapfen 22, die Öffnung 24 und das Abschlussstück 26 aus der Fig. 1 nicht dargestellt.

An den Rotorblättern 16 sind Windfahnen 44 zur Messung des Anströmwinkels des auf die Rotorblätter 16 treffenden Windes angebracht. Die Windfahnen 44 sind über (in Fig.3 dargestellte) elektrische Verbindung 52 mit dem Steuergerät 8 (Fig. 1) verbunden.

Anhand des Blockschaltbildes der Figur 3 wird im folgenden die Funktionsweise der erfindungsgemäßen Windenergieanlage beschrieben.

Während des Betriebes der Windenergieanlage 1 rotiert der Rotor 18 um die Achse des Achszapfens 22. Dabei weisen die Rotorblätter 16 eine bestimmte, mit Hilfe des Steuergerätes 8, des Verstellmotors 34 und des Verstellgetriebes 36 vorgegebene Winkelstellung relativ zur Ebene, in der die Rotorblätter 16 rotieren, der Rotorebene auf. Der momentane Winkel αₘₒₘₑₙₜₐₙ der Rotorblätter 16 relativ zur Rotorebene wird dem Steuergerät 8 von dem Verstellgetriebe 16 als Istwert der momentanen Stellung des Rotorblattes 16 über eine elektrische Verbindung 46 übermittelt. Gleichzeitig erhält das Steuergerät 8 von den Dehnungsstreifen 38, die an dem Achszapfen 22 befestigt sind, Messwerte über die momentane Belastung des Achszapfens 22 über die Leitung 42 ("Lastsignal Achszapfen" der Figur 3). Ebenfalls gleichzeitig mit der Übermittlung des momentanen Stellwinkels der Rotorblätter 16 erhält das Steuergerät 8 von den Dehnungsstreifen 40 auf der Rotornabe über die Leitung 48 Messwerte über die aktuelle Belastung der Rotornabe 14 ("Lastsignal Nabe" der Figur 3). Stellt das Steuergerät 8 mit Hilfe der Dehnungsstreifen 38, 40 eine einseitige Belastung des Rotors fest, so gibt das Steuergerät 8 unter Berücksichtigung des momentanen Stellwinkels αₘₒₘₑₙₜₐₙ der Rotorblätter 36 und des momentanen, von der Windfahne 44 ermittelten Anströmwinkels β ein Signal αₙₑᵤ über die Leitung 50 an den Verstellmotor 34 zur Verstellung des entsprechenden Rotorblattes 16 um die Differenz αₙₑᵤ - αₘₒₘₑₙₜₐₙ.

Dadurch dass das Steuergerät 8 kontinuierlich die Messwerte der Dehnungsstreifen 38 und 40 erhält und quasi instantan unter Berücksichtigung des ebenfalls ständig über die Leitung 52 an das Steuergerät 8 übermittelten Anströmwinkels β den Arbeitsbefehl an den Verstellmotor 34 zur Einstellung eines neuen Winkels der Rotorblätter 16 herausgibt, findet on-line mit einer Änderung der Lastverhältnisse im Bereich des Rotors eine Anpassung der Stellung der Rotorblätter 16 statt und somit ein on-line-Ausgleich unsymmetrischer Belastungen des Rotors 18.

Alternativ zu der Messung der momentanen Beanspruchung der Windenergieanlage durch Dehnungsstreifen an Rotornabe und Achszapfen ist auch eine Belastungsmessung direkt an den Rotorblättern durch entsprechende Dehnungsstreifen denkbar.

Abschließend sei festgehalten, dass die verschiedenen Signale (das heißt "Lastsignal Nabe" 40, "Lastsignal Achszapfen" 38, "momentaner Winkel αₘₒₘₑₙₜₐₙ" 46 und "Anströmwinkel β" 53), die zur Ermittlung des idealen Blattwinkels herangezogen werden, entweder gemeinsam oder auch alternativ verwendet werden können.

## Patentansprüche

1. Windenergieanlage (1),
mit einem Rotor (18) mit mindestens einem Rotorblatt (16) zur Umwandlung der Strömungsenergie des Windes in mechanische Energie,
mit einer Verstellvorrichtung (34, 36) zur individuellen Verstellung mindestens eines Rotorblattes (16),
mit einem Generator zur Umwandlung der mechanischen Energie des Rotors (18) in elektrische Energie,
mit einer Wirkverbindung zwischen dem Rotor (18) und dem Generator zur Übertragung der mechanischen Energie des Rotors (18) auf den Generator, wobei Rotor und Generator über eine Antriebswelle unmittelbar oder über ein Getriebe miteinander verbunden sind,
**gekennzeichnet durch**,
Messmittel (38, 40), die die momentane Beanspruchung eines Teils der Windenergleanlage (1), nämlich der Lager der Antriebswelle, ermitteln und die Messmittel In Form von an den Lagern angebrachten Dehnungsstreifen ausgebildet sind,
Steuermittel (8), die eine für die momentane Beanspruchung gewünschte Stellung mindestens eines Rotorblattes (16) ermitteln und das Rotorblatt (16) mit Hilfe der Verstellvorrichtung (34, 36) entsprechend verstellen, und
Verbindungsmittel (42. 46, 48, 50, 52), die die Verstellvorrichtung (34, 36) und die Messmittel (38, 40) mit den Steuermitteln (8) verbinden,

2. Windenergieanlage (1) nach Anspruch 1,
**dadurch gekennzeichnet, dass** die Stellung des Rotorblattes (16) oder der Rotorblätter (16) ständig der momentanen Beanspruchung der Windenergieanlage (1) angepasst wird.

3. Windenergieanlage (1) nach einem der vorstehenden Ansprüche,
**dadurch gekennzeichnet, dass** die Messmittel (38, 40) zur Ermittlung der Beanspruchung des Rotorblattes (16) eine am Rotorblatt (16) vorherrschende Windgeschwindigkeit ermitteln.

4. Windenergieanlage (1) nach Anspruch 3,
**dadurch gekennzeichnet, dass** die Messmittel (38, 40) zur Messung der Windgeschwindigkeit ein Anemometer aufweisen.

5. Windenergieanlage (1) nach Anspruch 4,
**dadurch gekennzeichnet, dass** das Anemometer auf dem Rotorblatt (16) angeordnet ist.

6. Windenergieanlage (1) nach einem der vorstehenden Ansprüche,
**dadurch gekennzeichnet, dass** die Messmittel (38, 40) ferner eine in einem Teilbereich des Rotors (18) vorherrschende mechanische Last ermitteln.

7. Windenergieanlage (1) nach einem der vorstehenden Ansprüche,
**dadurch gekennzeichnet, dass** die Messmittel (38, 40) ferner eine in einem verstellbaren Teilabschnitt des Rotors (18) vorherrschende Last ermitteln.

8. Windenergieanlage (1) nach einem der vorstehenden Ansprüche,
**dadurch gekennzeichnet, dass** die Messmittel (38, 40) ferner eine in dem verstellbaren Rotorblatt (16) vorherrschende Last ermitteln.

9. Windenergieanlage (1) nach einem der vorstehenden Ansprüche,
mit einer Rotornabe (14),
**dadurch gekennzeichnet, dass** die Messmittel (38, 40) ferner eine in der Rotornabe (14) vorherrschende Last ermitteln.

10. Windenergieanlage (1) nach einem der vorstehenden Ansprüche,
mit einem Achszapfen (22) zur Lagerung des Rotors (18),
**dadurch gekennzeichnet, dass** die Messmittel (38, 40) ferner eine in dem Achszapfen (22) vorherrschende Last ermitteln.

11. Windenergieanlage (1) nach einem der vorstehenden Ansprüche,
mit einer Antriebswelle, die Rotor (18) und Generator direkt oder über ein Getriebe verbindet,
**dadurch gekennzeichnet, dass** die Messmittel (38, 40) ferner eine in der Antriebswelle vorherrschende Last ermitteln.

12. Windenergieanlage (1) nach einem der vorstehenden Ansprüche, **dadurch gekennzeichnet, dass** die Messmittel (38, 40, 44) einen an dem zu verstellenden Rotorblatt (16) vorherrschenden Anströmwinkel des Windes ermitteln.

13. Windenergieanlage (1) nach Anspruch 12,
**dadurch gekennzeichnet, dass** die Messmittel (38, 40, 44) zur Messung des Anstromwinkels eine an dem Rotorblatt (16) angebrachte Windfahne (44) aufweisen.

14. Windenergieanlage (1) nach einem der vorstehenden Ansprüche,
mit mindestens zwei Rotorblättern,
**dadurch gekennzeichnet, dass** mindestens ein Rotorblatt (16) asynchron zu dem oder den anderen verstellbar ist.

15. Windenergieanlage (1) nach einem der vorstehenden Ansprüche,
**dadurch gekennzeichnet, dass** mindestens ein Teilabschnitt mindestens eines Rotorblattes (16) asynchron zu mindestens einem weiteren verstellbaren Teilabschnitt desselben Rotorblattes (16) oder zu dem oder den anderen Rotorblättern (16) oder deren Teilabschnitten verstellbar ist.

16. Windenergieanlage (1) nach einem der vorstehenden Ansprüche,
**dadurch gekennzeichnet, dass** sich die für eine bestimmte momentane Beanspruchung gewünschte Stellung des oder der Rotorblätter (16) über mit den Steuermitteln (8) verbundene Eingabemittel vorgeben läßt.

17. Windenergieanlage (1) nach einem der vorstehenden Ansprüche,
**dadurch gekennzeichnet, dass** die Verstellvorrichtung (34, 36) zur Verstellung des Rotorblattes (16) einen Verstellmotor (34) und ein von diesem angetriebenes Verstellgetriebe (36) aufweist, wobei die Steuermittel (8) von dem Verstellgetriebe (36) einen istwert über die momentane Stellung des Rotorblattes (16) erhalten und über dan Verstellmotor (34) das Rotorblatt (16) verstellen.

18. Windenergieanlage (1) nach Anspruch 17,
**dadurch gekennzeichnet, dass** die Steuermittel (8) die Verstellung des Rotorblattes (16) quasi gleichzeitig mit der Erfassung der Messwerte vornehmen.

19. Windenergieanlage (1) nach einem der vorstehenden Ansprüche,
**dadurch gekennzeichnet, dass** die Windenergleanlage (1) vom Horizontalachsentyp ist

20. Windenergieanlage (1) nach einem der vorstehenden Ansprüche,
**dadurch gekennzeichnet, dass** der Rotor (18) ein Luvläufer ist

21. Verfahren zur Anpassung einer Windenergieanlage (1) nach einem der vorstehenden Ansprüche an nur in einem Teilbereich der Windenergieanlage (1) vorherrschende momentane Beanspruchungen,
**dadurch gekennzeichnet, dass** von Messmitteln (38, 40) die momentane Beanspruchung der Lager der Antriebswelle mittels an den Lagern angebrachten Dehnungsmessstreifen ermittelt wird, von Steuermitteln (8) eine für die momentane Beanspruchung gewünschte Stellung mindestens eines Rotorblattes (16) ermittelt wird, um asymmetrische und die Lebensdauer verkürzende Beanspruchungen an Teilen der Windenergieanlage weitgehend zu vermeiden, wobei die Verstellvorrichtung (34, 36) und die Messmittel (38, 40) mit den Steuermitteln (8) mit Hilfe von Verbindungsmitteln (42, 46, 48, 50, 52) verbunden werde,

## Claims

1. Wind energy plant (1),
with a rotor (18) with at least one rotor blade (16) for converting the flow energy of the wind into mechanical energy,
with an adjusting device (34, 36) for individual adjustment of at least one rotor blade (16),
with a generator for converting the mechanical energy of the rotor (18) into electrical energy,
with an active connection between the rotor (18) and the generator for transmitting the mechanical energy of the rotor (18) to the generator, the rotor and generator being connected together via a drive shaft directly or via gears,
**characterised by**
measuring means (38, 40) which determine the instantaneous loading of part of the wind energy plant (1), namely the bearings of the drive shaft, and the measuring means are in the form of wire strain gauges attached to the bearings,
control means (8) which determine a position of at least one rotor blade (16) which is desired for the instantaneous loading and adjust the rotor blade (16) accordingly with the aid of the adjusting device (34, 36), and
connecting means (42, 46,448, 50, 52) which connect the adjusting device (34, 36) and the measuring means (38, 40) to the control means (8).

2. Wind energy plant (1) according to Claim 1, **characterised in that** the position of the rotor blade (16) or rotor blades (16) is constantly adapted to the instantaneous loading of the wind energy plant (1).

3. Wind energy plant (1) according to one of the preceding claims, **characterised in that** the measuring means (38, 40) for determining the loading of the rotor blade (16) determine a wind velocity prevailing on the rotor blade (16).

4. Wind energy plant (1) according to Claim 3, **characterised in that** the measuring means (38, 40) for measuring the wind velocity have an anemometer.

5. Wind energy plant (1) according to Claim 4, **characterised in that** the anemometer is arranged on the rotor blade (16).

6. Wind energy plant (1) according to one of the preceding claims, **characterised in that** the measuring means (38, 40) further determine a mechanical load prevailing in a partial area of the rotor (18).

7. Wind energy plant (1) according to one of the preceding claims, **characterised in that** the measuring means (38, 40) further determine a load prevailing in an adjustable partial area of the rotor (18).

8. Wind energy plant (1) according to one of the preceding claims, **characterised in that** the measuring means (38, 40) further determine a load prevailing in the adjustable rotor blade (16).

9. Wind energy plant (1) according to one of the preceding claims, with a rotor hub (14), **characterised in that** the measuring means (38, 40) further determine a load prevailing in the rotor hub (14).

10. Wind energy plant (1) according to one of the preceding claims, with a spindle (22) for bearing the rotor (18), **characterised in that** the measuring means (38, 40) further determine a load prevailing in the spindle (22).

11. Wind energy plant (1) according to one of the preceding claims, with a drive shaft which connects the rotor (18) and generator directly or via gears, **characterised in that** the measuring means (38, 40) further determine a load which prevails in the drive shaft.

12. Wind energy plant (1) according to one of the preceding claims, **characterised in that** the measuring means (38, 40, 44) determine a blowing angle of the wind prevailing on the rotor blade (16) to be adjusted.

13. Wind energy plant (1) according to Claim 12, **characterised in that** the measuring means (38, 40, 44) for measuring the blowing angle have a wind vane (44) attached to the rotor blade (16).

14. Wind energy plant (1) according to one of the preceding claims, with at least two rotor blades, **characterised in that** at least one rotor blade (16) can be adjusted asynchronously to the other(s).

15. Wind energy plant (1) according to one of the preceding claims, **characterised in that** at least one partial section of at least one rotor blade (16) can be adjusted asynchronously to at least one further adjustable partial section of the same rotor blade (16) or to the other rotor blade(s) (16) or partial section of them.

16. Wind energy plant (1) according to one of the preceding claims, **characterised in that** the position of the rotor blade(s) (16) desired for a specific instantaneous loading can be preset via input means connected to the control means (8),

17. Wind energy plant (1) according to one of the preceding claims, **characterised in that** the adjusting device (34, 36) for adjusting the rotor blade (16) has an adjusting motor (34) and adjusting gears (36) driven by this, wherein the control means (8) receive from the adjusting gears (36) an actual value on the instantaneous position of the rotor blade (16) and adjust the rotor blade (16) via the adjusting motor (34).

18. Wind energy plant (1) according to Claim 17, **characterised in that** the control means (8) perform the adjustment of the rotor blade (16) quasi simultaneously to the recording of the measured values.

19. Wind energy plant (1) according to one of the preceding claims, **characterised in that** the wind energy plant (1) is of the horizontal axis type.

20. Wind energy plant (1) according to one of the preceding claims, **characterised in that** the rotor (18) is a windward rotor.

21. Method for adapting a wind energy plant (1) according to one of the preceding claims to instantaneous loadings prevailing in only a partial section of the wind energy plant (1), **characterised in that** the instantaneous loading of the bearings of the drive shaft is determined by measuring means (38, 40) by means of wire strain gauges attached to the bearings, a position of at least one rotor blade (16) which is desired for the instantaneous loading is determined by control means (8) in order largely to avoid asymmetrical loading which shortens the serviceable life on parts of the wind energy plant, wherein the adjusting device (34, 36) and the measuring means (38, 40) are connected to the control means (8) with the aid of connecting means (42, 46, 48, 50, 52).

## Revendications

1. Eolienne (1),
comprenant un rotor (18) doté au moins d'une pale de rotor (16) pour transformer l'énergie d'écoulement du vent en énergie mécanique,
comprenant un dispositif de réglage (34, 36) servant au réglage individuel d'au moins une pale de rotor (16),
comprenant un générateur pour transformer l'énergie mécanique du rotor (18) en énergie électrique,
comprenant une liaison active entre le rotor (18) et le générateur aux fins de la transmission de l'énergie mécanique du rotor (18) au générateur, dans lequel le rotor et le générateur sont reliés l'un à l'autre directement par l'intermédiaire d'un arbre d'entraînement ou sont reliés l'un à l'autre par l'intermédiaire d'une transmission,
**caractérisée par**
des moyens de mesure (38, 40), qui déterminent la contrainte instantanée d'une partie de l'éolienne (1), à savoir des paliers de l'arbre d'entraînement et qui sont réalisés sous la forme de bandes d'allongement installées sur les paliers,
des moyens de commande (8), qui déterminent une position souhaitée, pour la contrainte instantanée, d'au moins une pale de rotor (16) et qui ajustent de manière correspondante la pale de rotor (16) à l'aide du dispositif de réglage (34, 36), et
des moyens d'assemblage (42, 46, 48, 50, 52), qui relient le dispositif de réglage (34, 36) et les moyens de mesure (38, 40) aux moyens de commande (8).

2. Eolienne (1) selon la revendication 1, **caractérisée en ce que** la position de la pale de rotor (16) ou des pales de rotor (16) est adaptée en permanence à la contrainte instantanée de l'éolienne (1).

3. Eolienne (1) selon l'une quelconque des revendications précédentes,
**caractérisée en ce que** les moyens de mesure (38, 40) servant à déterminer la contrainte de la pale de rotor (16) déterminent une vitesse du vent prédominante au niveau de la pale de rotor (16).

4. Eolienne (1) selon la revendication 3,
**caractérisée en ce que** les moyens de mesure (38, 40) pour mesurer la vitesse du vent présentent un anémomètre.

5. Eolienne (1) selon la revendication 4,
**caractérisée en ce que** l'anémomètre est disposé sur la pale de rotor (16).

6. Eolienne (1) selon l'une quelconque des revendications précédentes,
**caractérisée en ce que** les moyens de mesure (38, 40) déterminent en outre une charge mécanique prédominante dans une zone partielle du rotor (18).

7. Eolienne (1) selon l'une quelconque des revendications précédentes,
**caractérisée en ce que** les moyens de mesure (38, 40) déterminent en outre une charge prédominante dans une section partielle du rotor (18) pouvant être ajustée.

8. Eolienne (1) selon l'une quelconque des revendications précédentes,
**caractérisée en ce que** les moyens de mesure (38, 40) déterminent en outre une charge prédominante dans la pale de rotor (16) pouvant être ajustée.

9. Eolienne (1) selon l'une quelconque des revendications précédentes,
comprenant un moyeu de rotor (14),
**caractérisée en ce que** les moyens de mesure (88, 40) déterminent en outre une charge prédominante dans le moyeu de rotor (14).

10. Eolienne (1) selon l'une quelconque des revendications précédentes,
comportant un tourillon (22) pour supporter le rotor (18),
**caractérisée en ce que** les moyens de mesure (38, 40) déterminent en outre une charge prédominante dans le tourillon (22).

11. Eolienne (1) selon l'une quelconque des revendications précédentes,
comportant un arbre d'entraînement, qui relie le rotor (18) et le générateur directement ou par l'intermédiaire d'une transmission,
**caractérisée en ce que** les moyens de mesure (38, 40) déterminent en outre une charge prédominante dans l'arbre d'entraînement.

12. Eolienne (1) selon l'une quelconque des revendications précédentes,
**caractérisée en ce que** les moyens de mesure (38, 40, 44) déterminent un angle d'incidence du vent prédominant au niveau de la pale de rotor (16) devant être ajustée.

13. Eolienne (1) selon la revendication 12,
**caractérisée en ce que** les moyens de mesure (38, 40, 44) pour mesurer l'angle d'incidence présentent une girouette (44) installée sur la pale de rotor (16).

14. Eolienne (1) selon l'une quelconque des revendications précédentes,
comprenant au moins deux pales de rotor,
**caractérisée en ce qu'**au moins une pale de rotor (16) est ajustée de manière asynchrone par rapport à l'autre pale de rotor ou aux autres pales de rotor.

15. Eolienne (1) selon l'une quelconque des revendications précédentes,
**caractérisée en ce qu'**au moins une section partielle d'au moins une pale de rotor (16) peut être ajustée de manière asynchrone par rapport au moins à une autre section partielle ajustable de la même pale de rotor (16), ou par rapport à l'autre ou aux autres pales de rotor (16) ou par rapport aux sections partielles de ces dernières.

16. Eolienne (1) selon l'une quelconque des revendications précédentes,
**caractérisée en ce que** la position souhaitée, pour une certaine contrainte instantanée, de la ou des pales de rotor (16) peut être prédéfinie par l'intermédiaire de moyens d'entrée reliés aux moyens de commande (8).

17. Eolienne (1) selon l'une quelconque des revendications précédentes,
**caractérisée en ce que** le dispositif de réglage (34, 36) pour ajuster la pale de rotor (16) présente un moteur de réglage (34) et une transmission de réglage (36) entraînée par ce dernier, les moyens de commande (8) recevant de la transmission de réglage (36) une valeur réelle concernant la position instantanée de la pale de rotor (16) et ajustent la pale de rotor (16) par l'intermédiaire du moteur de réglage (34).

18. Eolienne (1) selon la revendication 17,
**caractérisée en ce que** les moyens de commande (8) entreprennent le réglage de la pale de rotor (16) quasiment en même temps que la détection des valeurs de mesure.

19. Eolienne (1) selon l'une quelconque des revendications précédentes,
**caractérisée en ce que** l'éolienne (1) est à axe horizontal.

20. Eolienne (1) selon l'une quelconque des revendications précédentes,
**caractérisée en ce que** le rotor (18) est un rotor face au vent.

21. Procédé pour adapter une éolienne (1) selon l'une quelconque des revendications précédentes aux contraintes instantanées prédominantes uniquement dans une zone partie de l'éolienne (1),
**caractérisé en ce que** la contrainte instantanée des paliers de l'arbre d'entraînement est déterminée par des moyens de mesure (38, 40) au moyen de bandes d'allongement installées au niveau des paliers, **en ce qu'**une position souhaitée, pour la contrainte instantanée, d'au moins une pale de rotor (16) est déterminée par des moyens de commande (8) afin d'éviter largement des contraintes asymétriques et réduisant la durée de vie au niveau de parties de l'éolienne, le dispositif de réglage (34, 36) et les moyens de mesure (38, 40) étant reliés aux moyens de commande (8) à l'aide de moyens d'assemblage (42, 46, 48, 50, 52).
